# EUROPEAN PATENT APPLICATION

(11) **EP 2 243 587 A1**
(43) Date of publication of application: **27.10.2010**
(21) Application number: 10157709.6
(22) Date of filing: 25.03.2010
(51) Int. Cl.: B23K 20/12, B23K 31/12, B23K 20/24

(54) **Method of analysing a welding parameter associated with linear friction welding**

(30) Priority: 22.04.2009 GB 0906869
(71) Applicant: Rolls-Royce plc, London SW1E 6AT (GB)
(72) Inventor: Johnson, Andrew David, Derby, Derbyshire DE22 1EU (GB); Young, Stuart Andrew, Inglewood 4390 (NZ)
(74) Representative: Barcock, Ruth Anita

(57) **Abstract**

A method of analysing a welding parameter associated with a linear friction welding process. The linear friction welding process incorporates a weld cycle comprising a burn-off phase, the end of the burn- off phase being determined during the weld cycle by reference to a respective weld upset target. The method comprises: recording a profile of the weld parameter as a function of time during the weld cycle and assessing the recorded profile against a predetermined, respective threshold profile for the weld parameter which is based on a pre-estimate of the end of the burn-off phase. The assessment is carried out retrospectively following a determination of the actual end of the burn-off phase for the recorded profile, and comprises time-shifting the threshold profile relative to the recorded profile so that the pre-estimated endpoint of the burn-off phase is closer to, and preferably coincidental with, the actual endpoint of the burn off phase.

## Description

The present invention relates to linear friction welding and, in particular, to a method of analysing a welding parameter associated with a linear friction welding process. The invention is concerned with linear friction welding processes which incorporate a weld cycle comprising a "burn-off" phase, wherein the end of the burn-off phase is determined during the weld cycle by reference to a respective pre-set weld upset.

The invention finds particular application in the field of gas turbines, where linear friction welding may be used to attach individual blades to a respective disc to form "blisks"; however, the invention is not limited to any such application.

### Background of the Invention

Friction welding is an essentially solid-state process which can be used to form a high-integrity bond between components, in particular metallic components. The process relies on pressing the components against one another, rubbing together respective faying surfaces on the components, and relying on friction between these faying surfaces to generate the heat necessary for solid-state diffusion between the components.

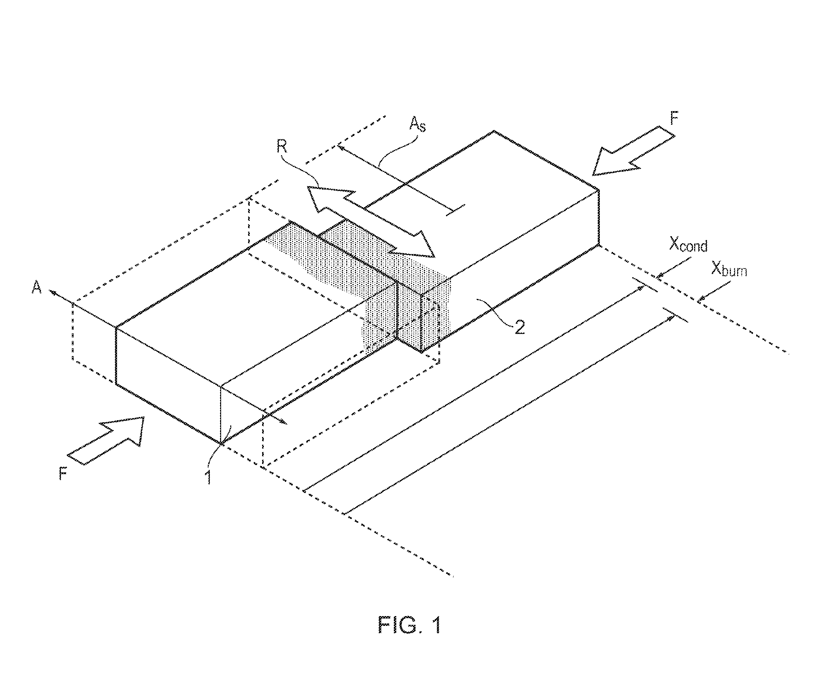

In linear friction welding, illustrated very schematically in Figure 1, a relative, linear reciprocating motion A of the components 1, 2 is used to generate the required friction between respective faying surfaces on the two components 1, 2, under an applied axial load, F. Linear friction welding finds particular application in the field of gas turbines, where it is commonly used to attach individual blades to a respective disc to form a one- piece bladed disc, or "blisk"; here, the blades are typically mounted for reciprocating, linear motion relative to the disc, which is held in fixed position.

A typical linear friction welding process comprises a four-phase weld cycle incorporating, in chronological order:
1 A "contact" phase, during which the components are initially brought into contact with one another;
2 a "conditioning" phase, during which the faying surfaces are rubbed together under a conditioning pressure with the aim of smoothing and heating the faying surfaces;
3 a "burn-off" phase, during which the faying surfaces continue to be rubbed together, expelling dirt and debris as flash and elevating the faying surfaces to a target weld temperature, and
4 a "forging" phase during which the components are subsequently brought into controlled axial alignment, and a forge pressure between the components is maintained to consolidate the final joint.

The applied axial load F is controlled in predetermined manner during each of the four phases of the weld cycle. For example, the start of the conditioning phase will typically trigger a ramping up of the applied axial load F to a first, preset limit corresponding to the conditioning pressure, and this applied axial force F may then be maintained at such level until the start of the burn-off phase. The start of the burn-off phase may then trigger a further ramping up of the applied axial load F to a second, preset limit corresponding to the burn-off pressure, and so on.

The end of each of the conditioning phase and the burn-off phase will typically be determined during the weld cycle with reference to corresponding pre-set target weld upsets X_{cond}, X_{burn} (see Figure 1). By "weld upset" is meant the axial shortening of the components during the weld cycle as material is removed at the interface of the faying surfaces; the weld upset may conveniently be measured relative to the initial contact position of the components. So, for example, the conditioning phase may be determined to end once the weld reaches an axial weld upset of, say, 1 mm, relative to the initial contact position, whilst the end of the burn-off phase will be determined once the weld reaches an axial weld upset of, say, 2.5mm relative to the initial contact position.

The applied axial load F is a critical welding parameter, which has an effect on the final integrity of the weld. In practice, however, the applied axial load F is prone to a degree of fluctuation because the actual applied axial load F will depend not only upon the predetermined, requested axial load, but also on any mechanical, frictional or other losses, some of which losses may vary during the weld cycle. Thus, in order to ensure that the applied axial load F is maintained within tolerable limits during the weld cycle, the actual applied axial load F is typically monitored against a threshold profile during the weld cycle. As the duration of the conditioning phase and/or the burn-off phase is only finally determined during the weld cycle, in accordance with the aforementioned weld upset targets X_{cond}, X_{burn}, the threshold profile is typically based on a pre-estimate of the end of each of the conditioning phase and the burn-off phase, relative to the start of the weld cycle. This pre-estimate is generally based on data taken from previous weld cycles, which have been metallurgically interrogated for weld integrity.

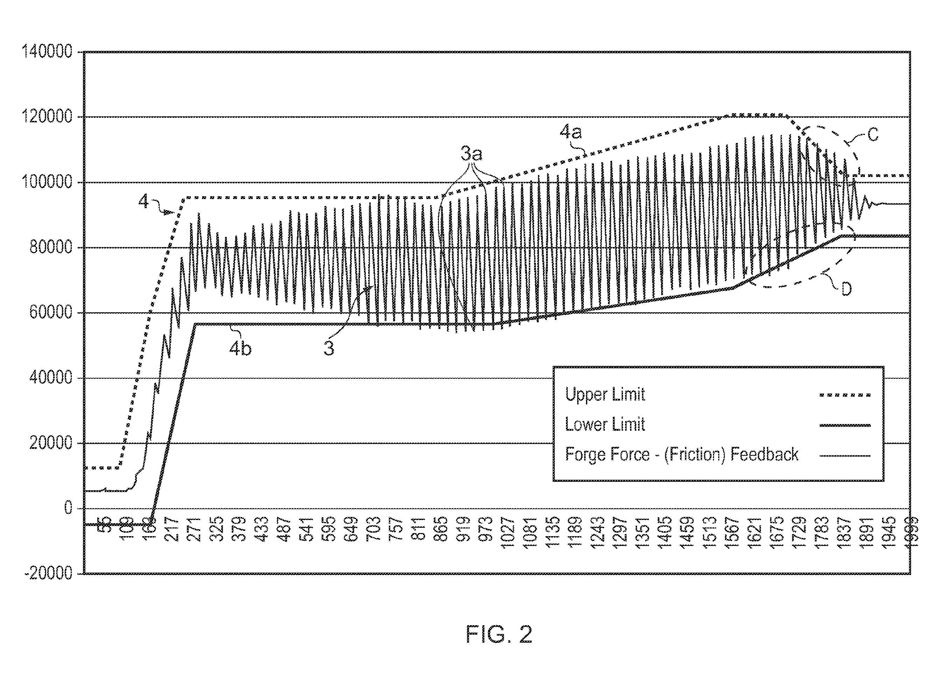

By way of example, Figure 2 shows a signal 3 representative of the applied axial load F for a typical weld cycle, and a respective threshold profile 4 derived from previous data on comparable weld cycles. In this particular example, application of the axial load F has been implemented under closed-loop control, characterised by a number of "feedback spikes" 3a in the signal 3, and the threshold profile 4 is in the form of a "dynamic window" bounded by an upper dynamic limit 4a and a lower dynamic limit 4b.

In general a "fail" signal will be generated if the profile for the applied axial load, F, breaches the threshold profile during the weld cycle, for example in the regions C and D in the case of the feedback signal shown in Figure 2. This "fail" signal may be then used to generate an operator alarm, or possibly implement an automated system shutdown. The weld components may then be scrapped, possibly depending upon the nature and severity of the breach which has occurred.

### Summary of the invention

As part of the present invention it has been found that, in practice, the above mentioned method of monitoring the applied axial load F during the weld cycle does not give sufficiently accurate results; in particular, the method does not sufficiently account for the initial surface topography or "foot flatness" of each of the faying surfaces. This can lead either to "false fails", which can result in costly scrapping of weld components, or "false accepts", which may ultimately compromise in-service performance or safety.

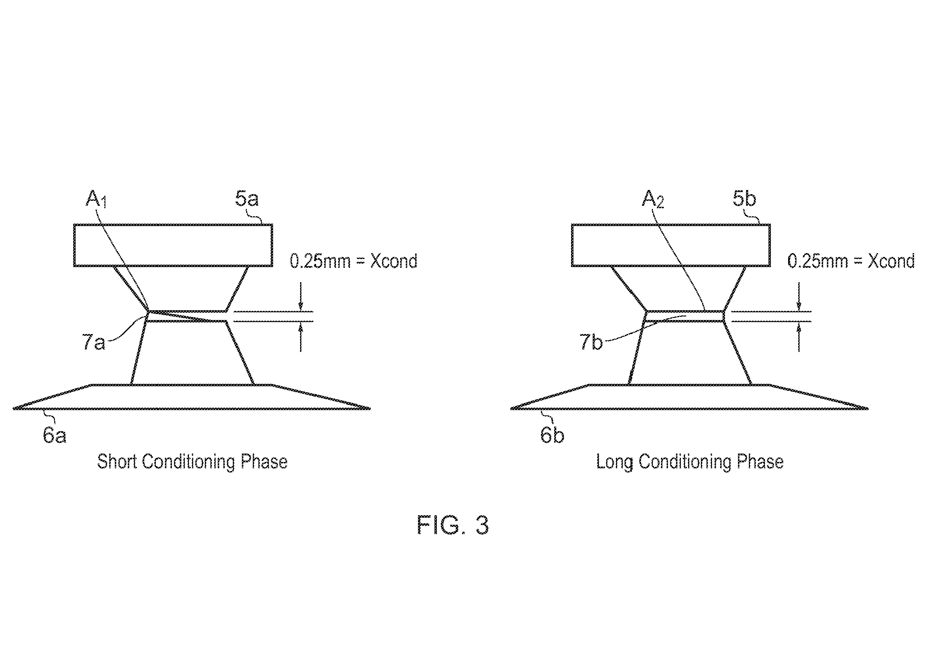

The problem can be explained in more detail with reference to Figure 3, which shows two examples of a blade and a disc during the "contact" phase of a comparable weld cycle.

In the example shown on the left of Figure 3, a blade 5a makes contact with a respective disc 6a over a contact area A₁, which is determined by the surface topography of a contact region 7a of the disc 6a. In the example shown on the right of Figure 3, a blade 5b makes contact with a respective disc 6b over a contact area A₂, which likewise is determined by the surface topography of a contact region 7b of the disc 6b. The contact region 7b is somewhat flatter than the contact region 7a, and consequently the contact area A₂ is larger than the contact area A₁.

As already mentioned, the conditioning phase is predetermined to end once the components reach a target weld upset X_{cond} which in the case of each of the examples shown in Figure 3 is 0.25mm, measured relative to the initial contact position (see Figure 3). However, due to the relative difference in the size of the contact areas A₁ and A₂, the rate of axial upset during the conditioning phase will be quicker in the case of the blade 5a and disc 6a, as compared to the blade 5b and disc 6b. Consequently, there will be a corresponding disparity in the duration of the conditioning phase between the two examples, with the blade 5a and disc 6a being subject to a relatively short conditioning phase and the blade 5b and disc 6b being subject to a relatively long conditioning phase.

The initial surface topography of the faying surfaces thus has an effect on the actual duration of the conditioning phase, despite the fixed pre-set target weld upset, which may lead to a significant deviation in the actual duration of the conditioning phase from the pre-estimated duration of the conditioning phase used to generate the threshold profile.

Deviations in the contact area between the faying surfaces may carry through to the burn-off phase, and consequently the initial surface topography of the faying surfaces may also have an indirect, "knock-on" effect on the actual duration of the burn-off phase (which is not fixed, but is instead determined during the weld cycle by reference to a target weld upset, X_{burn}). Also, in the case of a relatively short conditioning phase (e.g. for blade 5a and disc 6a) the temperature of the faying surfaces may be relatively low at the end of the conditioning phase, which may then impact upon the actual duration of the burn off phase.

Thus, there may also be significant deviation in the actual duration of the burn-off phase from the pre-estimated duration of the burn-off phase used to generate the threshold profile, even where there is not significant deviation in the duration of the conditioning phase from the respective pre-estimate.

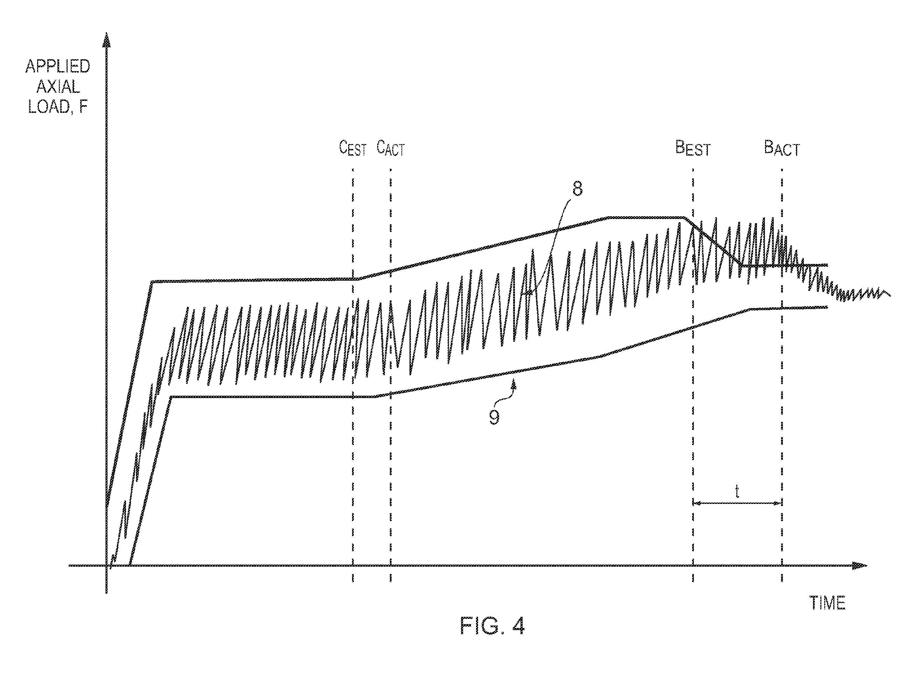

These deviations of the actual endpoints of the conditioning phase and/or burn-off phase from the pre-estimated endpoints for the phases can lead to "mismatching" between the recorded profile for the axial applied load, F and the threshold profile for the axial applied load, F, as illustrated schematically in Figure 4. Here, a progressive mismatching during the weld cycle can be observed between a recorded profile 8 for the applied axial load F and a respective threshold profile 9. In Figure 4, Cₑₛₜ and Bₑₛₜ represent, respectively, the pre-estimated endpoints of the conditioning phase, whilst C_{act} and B_{act} represent, respectively, the actual endpoints of the conditioning phase and burn-off phase.

The problem of mismatching between the profiles is corroborated by empirical data.

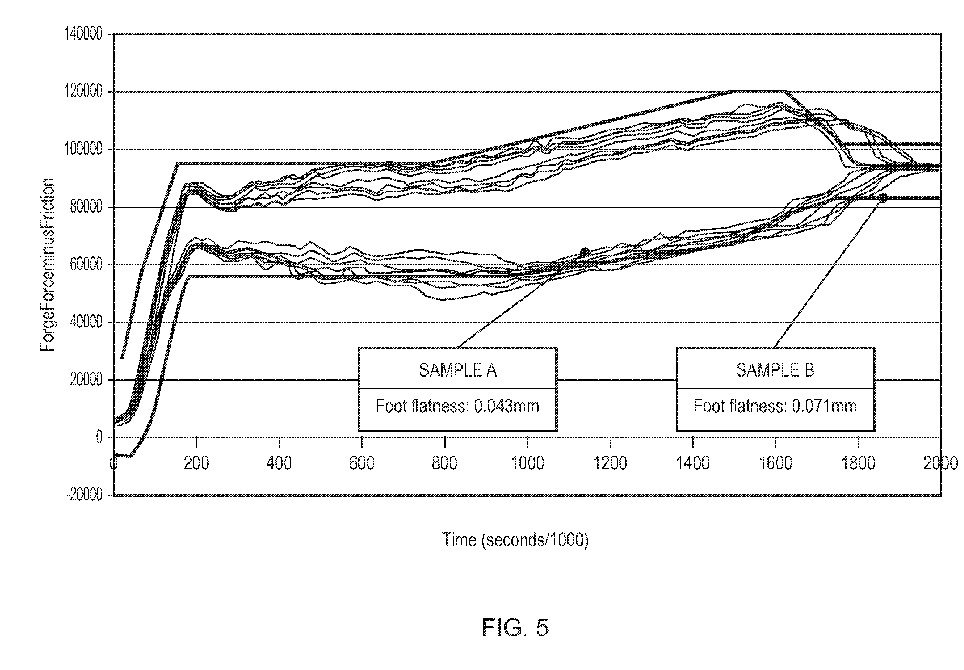

Figure 5 shows the upper and lower limits of a feedback signal recorded during a weld cycle for a number of different sample blades, as well as a predetermined threshold profile for the weld cycle. In each case, the weld cycle is characterised by the same pre-set axial weld upset targets for the endpoint of the conditioning phase and the burn off phase, and the pre-determined threshold profile is common to each sample; however the various samples have different surface roughness, characterised by maximum "peak-to trough" amplitude; two particular samples are highlighted: sample A, having a maximum "peak-to-trough" amplitude of 0.043mm, and sample B, having a maximum "peak-to-trough" amplitude of 0.071 mm. Progressive mismatching of the feedback signals can be observed as a function of time throughout the weld cycle, with mismatching becoming particularly marked near the end of the weld cycle. The level of mismatching increases in relation with the maximum "peak-to-trough" amplitude.

It is an object of the present invention to seek to provide an improved method of analysing a welding parameter for linear friction welding processes of the type in which the end of the burn-off phase is determined during the weld cycle by reference to a respective pre-set weld upset.

According to the present invention, there is provided a method of analysing a welding parameter associated with a linear friction welding process, the linear friction welding process incorporating a weld cycle comprising a burn-off phase, the end of the burn- off phase being determined during the weld cycle by reference to a respective weld upset
a) recording a profile of the weld parameter as a function of time during the weld cycle; and
b) assessing the recorded profile against a predetermined, respective threshold profile for the weld parameter, the threshold profile being based on a pre-estimate of the end of the burn-off phase; wherein
said assessment in step b) is carried out retrospectively following a determination of the actual end of the burn-off phase for the recorded profile, and the assessment comprises time-shifting the threshold profile relative to the recorded profile so that the pre-estimated endpoint of the burn-off phase is closer to the actual endpoint of the burn off phase.

The assessment may comprise time-shifting the threshold profile relative to the recorded profile so that the pre-estimated endpoint for the burn-off phase coincides with the actual endpoint of the burn-off phase.

The linear friction welding process itself may be one which is used to join a blade to a disc as part of blisk manufacture.

The welding parameter may be the axial applied load during the weld cycle.

The determination of the actual endpoint of the burn off phase may comprise:
a) recording a weld upset profile as a function of time; and
b) calculating or estimating the endpoint of the burn-off phase from the weld upset profile, optionally by determining a point on the weld upset profile corresponding to the target weld upset.

In one embodiment, the endpoint of the burn-off phase is estimated by evaluating a delta function for the weld upset curve in order to determine when the rate of weld upset falls below a threshold level.

One or both of the assessment and the determination of the endpoint of the burn-off phase may be carried out after completion of the weld cycle.

### Brief Description of the Drawings

Figure 1 is a highly schematic, perspective view illustrating a linear friction welding process;
Figure 2 is a graph showing a recorded profile of the applied axial load F as a function of time during a weld cycle, along with a respective predetermined 'dynamic window' for the applied axial load;
Figure 3 is a schematic cross-sectional view through two examples of a blade and disc during the "contact" phase of a weld cycle;
Figure 4 is a graph illustrating "mismatching" between a recorded profile of the applied axial load F and a respective predetermined "dynamic window";
Figure 5 is a graph showing the upper and lower limits of the applied axial force F for a number of sample blades in a linear friction welding process, along with the corresponding predetermined threshold profile for the respective weld cycles;
Figure 6 is a graph corresponding to Figure 4, but with the threshold profile "time-shifted" relative to the recorded profile; and
Figure 7 is a graph illustrating a method for estimating the actual end of the burn-off following completion of the respective weld cycle.

### Description of Specific Embodiments of the Invention

So that the invention may be more readily understood, aspects of the invention will now be described in more detail.

It has been assumed that the weld parameter being analysed is the axial applied load F (see Figure 1); however, the invention may be used to analyse other weld parameters in a suitable linear friction welding process, such as the stroke amplitude As or applied reciprocating load R (see Figure 1), and references to the applied axial load F may be read as a reference to such other weld parameters.

The linear friction welding process is taken to have a weld cycle comprising a conditioning phase and a burn-off phase, with the end of each of the conditioning phase and the burn-off phase being determined during the weld cycle by reference to a respective weld upset target. The linear friction welding process itself may be conventional, and will not therefore be described in any further detail here. In general, it is expected that the linear friction welding process will be carried out using a suitable conventional linear friction welding machine.

The profile of the actual axial applied load F may be recorded during the weld cycle, as a function of time, using any conventional method. For example, suitable sensors may be used for recording the profile, which sensors may already form part of an existing linear friction welding machine.

Following recordal of the profile for the axial applied load F, the recorded profile is assessed against a threshold profile for the axial applied load F, which is taken to be in the form of a dynamic window, similar to the dynamic window in Figure 4, but which may alternatively comprise only a dynamic upper or lower limit, as required.

The threshold profile is a predefined profile which is based on a pre-estimate of the endpoint of each of the conditioning phase and the burn off phase for the weld cycle. The pre-estimated endpoints for the conditioning phase and the burn-off phase may be based on data captured from previous, comparable weld cycles which have produced welds demonstrating required metulurgical properties.

In practice, the recorded profile and the threshold profile may suffer from "mismatching", as already discussed and as illustrated in Figure 4. In order to compensate for this, the assessment of the recorded profile is carried out retrospectively in accordance with the present invention i.e. following a determination of the actual endpoint of the burn-off phase for the weld cycle. The actual endpoint of the burn-off phase is then used as a basis for effecting a suitable "time-shift" of the threshold profile, relative to the recorded profile, so that the pre-estimated, nominal endpoint for the burn off phase on the threshold profile coincides with, or at least lies closer to, the actual endpoint of the burn-off phase (in the time domain).

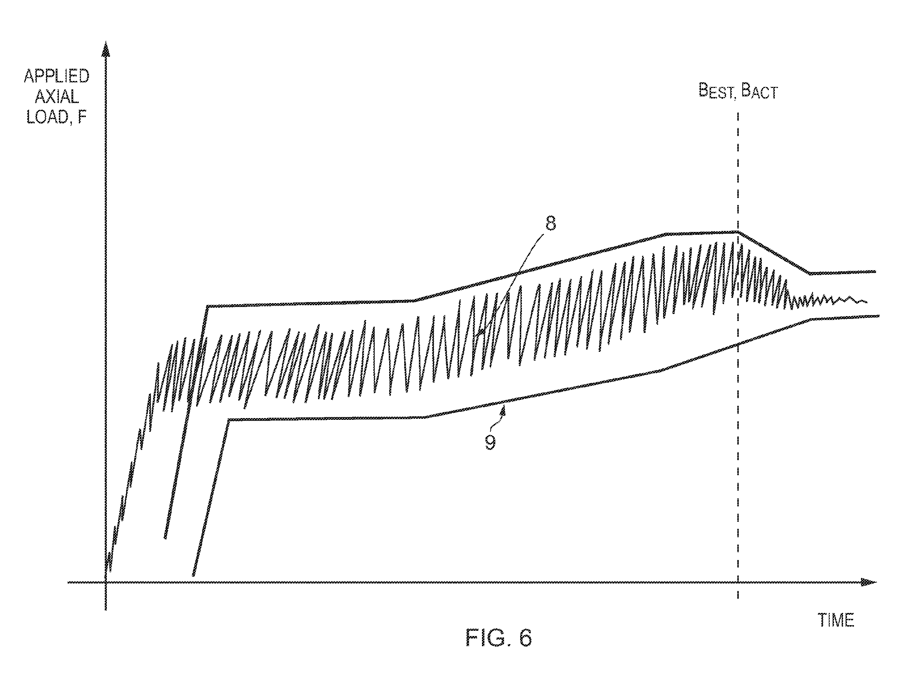

Figure 6 corresponds generally to Figure 4, but illustrates the retrospective time-shifting of the threshold profile 9 by an amount *t* (see Figure 4) in accordance with the present invention, so that the pre-estimated endpoint of the burn-off phase, Bₑₛₜ, coincides with the actual endpoint of the burn-off phase, B_{act}.

By time-shifting the threshold profile 9 relative to the recorded profile 8 in the manner described, the threshold profile 9 and recorded profile 8 are better matched to one another in the region immediately either side of the (actual) end of the burn-off phase B_{act}. Accurate assessment of the applied axial load F is thus focussed more closely on a critical part of the weld cycle, namely in the region of the (actual) end of the burn-off phase. At the same time, it will be appreciated that the analysis according to the present invention can still be carried out using existing, predetermined threshold profiles.

It should be noted that the time-shifting of the threshold profile 9 is a straightforward translation in the time domain. Consequently, better matching of the threshold profile 9 with the recorded profile 8 in the region of the (actual) end of the burn-off phase will generally come at the expense of increasing the mismatch between the profiles 8, 9 towards the start, and possibly the end, of the weld cycle (see Figure 6). However, it is believed that the benefit of improving assessment accuracy in the critical region either side of the endpoint of the burn off phase considerably outweighs the associated penalty of increasing the mismatch between the profiles towards the start and/or end of the weld cycle. A simple translational "time-shift" is also readily and conveniently achievable without significantly increasing the analysis time.

A suitable "weighting function" may be used in order to reduce the possibility of "false fails" triggered towards the start and end of the weld cycle; alternatively, the threshold profile 9 may effectively be "cropped", so that the assessment of the recorded profile is only carried out within a predefined window either side of the endpoint of the burn-off phase B_{act}.

Although time-shifting of the threshold profile 9 has been described in graphical terms with reference to Figures 4 and 6, it will nevertheless be appreciated that the recorded profile 8 may be assessed against the threshold profile 9 without actually constructing a graphical plot of the profiles. In any case, suitable software may be used to carry out the assessment.

An important aspect of the invention is that the assessment of the recorded profile 8 is carried out retrospectively. By "retrospectively" is meant after determination of the actual end point of the burn-off phase, B_{act}. The actual endpoint B_{act} may itself be determined either during the weld cycle or after completion of the weld cycle. In the former case, the assessment of the recorded profile 8 against the threshold profile 9 may be carried out during the remainder of the weld cycle, or after completion of the weld cycle.

The actual endpoint B_{act} of the burn-off phase may itself be determined in any suitable manner, and may in fact form part of the existing data capture on certain conventional linear friction welding machines, where the endpoint of the burn-off phase is generally also used as one of the axial load "triggers" during automated control of the applied axial load, F

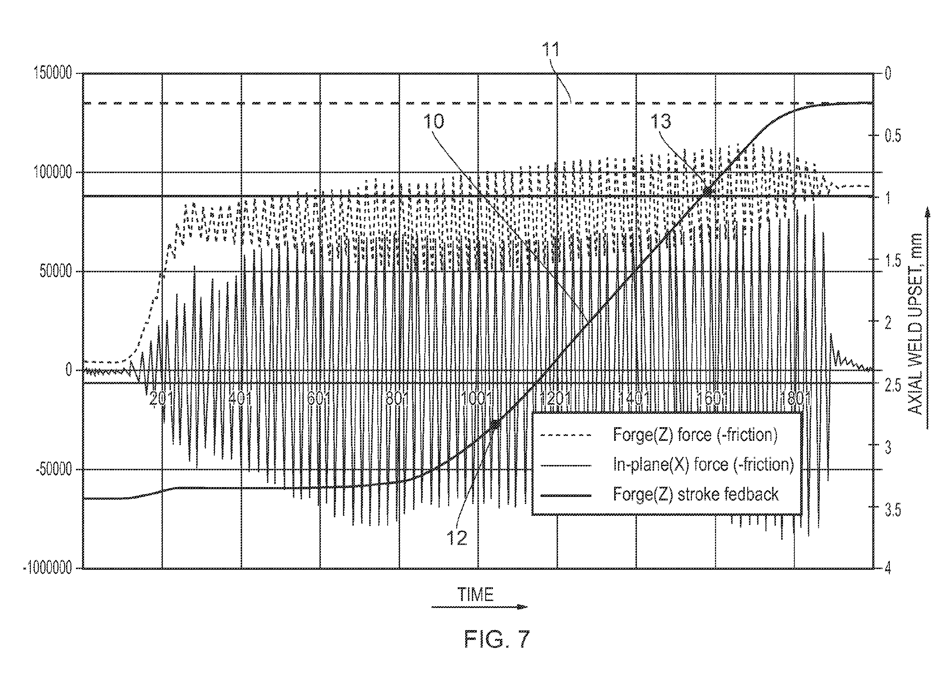

Figure 7 shows one possible method for determining the actual endpoint B_{act} using a "graph-based" method (which it should be noted may not necessarily require actual plotting of a graph, but is nevertheless conveniently explained with reference to such a graph). Here, an axial weld upset curve 10 (recorded as a function of time during the weld cycle) is extrapolated to determine the intersection between the weld upset curve 10 and the target axial weld upset limit 11 representing B_{act} (which in this case is set at approximately 0.25mm). Extrapolation of the weld upset curve 10 may be based on a conventional "line of best fit" between two points 12, 13 along the weld upset curve 10.

It will be appreciated that the method illustrated in Figure 7 only approximately determines the endpoint of the burn-off phase B_{act}. Nevertheless, it is envisaged that errors in determining B_{act} using this method will be small compared to the deviations between the actual end point B_{act} and any pre-estimate of the end of the burn-off phase which forms the basis of the threshold profile 9.

A "graph based" method for approximately determining B_{act}, such as the one illustrated in Figure 7, may be particularly useful in cases where there is insufficient data directly to determine B_{act} by any other means, or perhaps where the target weld upset for B_{act} may not be reached in practice. Other "graph-based" methods may be used as appropriate; for example, B_{act} may be determined by evaluating a delta function for the weld upset curve in order to determine when the rate of weld upset falls below a threshold level.

## Claims

1. A method of analysing a welding parameter associated with a linear friction welding process, the linear friction welding process incorporating a weld cycle comprising a burn-off phase, the end of the burn- off phase (Bact) being determined during the weld cycle by reference to a respective weld upset target, the method **characterised in that:**
a) a profile (8) of the weld parameter is recorded as a function of time during the weld cycle; and
b) the recorded profile (8) is assessed against a predetermined, respective threshold profile (9) for the weld parameter, the threshold profile (9) being based on a pre-estimate of the end of the burn-off phase (Best); wherein
said assessment in step b) is carried out retrospectively following a determination of the actual end of the burn-off phase for the recorded profile (8), and the assessment comprises time-shifting the threshold profile (9) relative to the recorded profile (8) so that the pre-estimated endpoint (Best) of the burn-off phase is closer to the actual endpoint (Bact) of the burn off phase.

2. A method according to claim 1, **characterised in that** the assessment comprises time-shifting the threshold profile (9) relative to the recorded profile (8) so that the pre-estimated endpoint (Best) for the burn-off phase coincides with the actual endpoint (Bact) of the burn-off phase.

3. A method according to claim 1 or 2, **characterised in that** the linear friction welding process is used to join a blade to a disc as part of blisk manufacture.

4. A method according to any preceding claim, **characterised in that** the welding parameter is the axial applied load (F) during the weld cycle.

5. A method according to any preceding claim, **characterised in that** said determination of the actual endpoint of the burn off phase comprises:
a) recording a weld upset profile (10) as a function of time; and
b) calculating or estimating the endpoint of the burn-off phase from the weld upset profile (10).

6. A method according to claim 5, **characterised in that** the endpoint of the burn-off phase is estimated by evaluating a delta function for the weld upset curve (10) in order to determine when the rate of weld upset falls below a threshold level.

7. A method according to claim 5, **characterised in that** step b) comprises determining a point on the weld upset profile corresponding to the target weld upset.

8. A method according to any preceding claim, **characterised in that** said assessment and/or said determination of the endpoint of the burn-off phase is/are carried out after completion of the weld cycle.
